Europäisches Patentamt

European Patent Office

Office européen des brevets

(11) Veröffentlichungsnummer: **0 091 698**
**B1**

⑱

# EUROPÄISCHE PATENTSCHRIFT

(12)

(45) Veröffentlichungstag der Patentschrift: 28.09.88

(21) Anmeldenummer: 83103579.5

(22) Anmeldetag: 13.04.83

(51) Int. Cl.⁴: **A 22 C 17/12**

(54) Verfahren und Vorrichtung zum Steuern der Messerstellung bei einer Entschwartungsmaschine.

(30) Priorität: 14.04.82 DE 3213730

(43) Veröffentlichungstag der Anmeldung:
19.10.83 Patentblatt 83/42

(45) Bekanntmachung des Hinweises auf die
Patenterteilung:
28.09.88 Patentblatt 88/39

(84) Benannte Vertragsstaaten:
AT BE CH FR GB LI NL SE

(56) Entgegenhaltungen:
DE-A-1 429 879
DE-A-1 454 077
DE-A-2 012 724
DE-B-1 269 314
US-A-2 477 289
US-A-2 856 630
US-A-3 255 485

(73) Patentinhaber: Weber, Günther
Oberer Birkenweg 176
D-3560 Biedenkopf-Wallau (DE)

(72) Erfinder: Weber, Günther
Oberer Birkenweg 176
D-3560 Biedenkopf-Wallau (DE)

(74) Vertreter: Dipl.-Phys.Dr. Manitz Dipl.-Ing., Dipl.-
Wirtsch. Finsterwald Dipl.-Ing. Grämkow Dipl.-
Chem.Dr. Heyn Dipl.-Phys. Rotermund
Morgan, B.Sc.(Phys.) Robert-Koch-Strasse 1
D-8000 München 22 (DE)

Courier Press, Leamington Spa, England.

## Beschreibung

Die Erfindung betrifft ein Verfahren zum Steuern der Messerstellung vor und während der Anschnittphase bei einer Maschine zum Entschwarten oder Enthäuten von Fleisch und dergleichen mittels eines bezüglich einer angetriebenen Förderwalze beweglich gelagerten und unter Federvorspannung stehenden Messers, bei dem das Messer im Leerlauf der Maschine jeweils in eine im Vergleich zur vorgebbaren Betriebsstellung angehobene Stellung und beim Auftreten eines Widerstandes im Getriebeantrieb der Förderwalze in die Betriebsstellung zurückgeführt wird. Ferner ist die Erfindung auf eine Vorrichtung zur Durchführung dieses Verfahrens gerichtet.

Es sind Speckentschwartungsmaschinen bekannt, bei denen der Messerhalter an seinem hinteren Ende schwenkbar gelagert ist, das zu entschwartende Gut mittels einer Zugwalze dem Messer zugeführt und zum Erleichtern des Anschneidens das zunächst in den weichen Speck schneidende Messer mittels eines Fußhebels von einer Bedienungsperson abgesenkt wird. Diese Anordnung ist nicht zur Automatisierung geeignet und besitzt ferner den Nachteil, daß es in das Belieben der Bedienungsperson gestellt ist, wann das Messer abgesenkt wird. Bei verspätetem Absenken des Messers ergibt sich ein störender Verlust an wertvollem Speck.

Aus der DE—PS 20 12 724 ist eine Speckentschwartungsmaschine bekannt, bei der das schwenkbar gelagerte Messer mittels einer Zylinder-Kolbenanordnung zwischen einer Anschnittstellung und einer Arbeitsstellung umsteuerbar ist. Das Umsteuern des Messers zwischen diesen beiden Positionen erfolgt in Abhängigkeit von einer Fotozelle, die auf das jeweils einlaufende Abschwartgut anspricht. Diese aufwendige Anordnung ist wegen der sich in der Praxis stets einstellenden Maschinenverschmutzung besonders störungsanfällig.

Aus der DE—PS 12 93 635 ist eine Speckentschwartungsmaschine mit einer das zu entschwartende Gut gegen eine Messerschneide fördernden Zugwalze sowie einem verstellbaren Messerhalter bekannt, wobei eine auf den Messerhalter einwirkende Feder die unbelastete Schneide selbsttätig in die Anschnittstellung drückt und das die Schneide belastende Abschwartgut selbsttätig diese Schneide entgegen der Federkraft rückwärts sowie näher an den Zugwalzenmantel in die Abschwartstellung bewegt. um den Übergang zwischen der Anschnittstellung und der Abschwartstellung sicherzustellen, ist für den Messerhalter eine Führung vorgesehen, welche die Schneide entlang einer Kurve führt, die sich von der Anschnittstellung an stetig und im gleichen Krümmungssinn wie der Zugwalzenmantel diesem nähert. Dadurch soll erreicht werden, daß das Messer zu Beginn des Entschwartungsvorgangs zunächst in den weichen Speck hineinschneidet und sich dann mit zunehmenden Belastung nach unten, zur Schwarte hin, automatisch absenkt und entlang der Schwarte den Speck abhebt. Nachteilig ist dabei, daß mittels der einzigen vorgebbaren Anschnittstellung den hinsichtlich ihrer Härte, Zähigkeit und Dicke unterschiedlichen Schwartenschichten nicht Rechnung getragen werden kann und demgemäß Nachbearbeitungsvorgänge notwendig werden.

Aus der DE—B—1 269 314 ist eine Vorrichtung zum Enthäuten von Fischfilets bekannt, bei welcher das schwenkbar gelagerte Enthäutemesser gegen das mit der Hauseite auf der Enthäutewalze liegenden Filet herangeschwenkt wird, wenn durch Einlaufen des Filetendes in den Spalt zwischen der Enthäutewalze und der Andrückwalze der Zahndruck im Walzenrädergetriebe erhöht wird. Der erhöhte Zahndruck bewirkt die Verschwenkung eines Schaltrads, das in einer unter der Wirkung einer Rückholfeder stehenden Schaltschwinge gelagert ist. Aufgrund der gewählten Halterung und Lagerung führt das Enthäutemesser eine komplizierte Bewegung zwischen vier verschiedenen Positionen durch. Während dieses komplizierten Bewegungsablaufs gelangt das Messer auch von einer Ausgangsstellung, bei der es nicht in Eingriff mit dem zu entschwartenden Gut kommt, in eine Betriebsstellung, bei der ein Abschwarten möglich ist. Aufgrund der für das Enthäutemesser vorgesehenen Getriebesteuerung ist die erzielbare Bewegungsgeschwindigkeit des Enthäutemessers begrenzt, und es ist insbesondere nicht möglich, das Enthäutemesser schlagartig von einer Position in eine andere zu überführen.

Aus der US—A—2 856 630 ist ebenfalls eine Vorrichtung zum Enthäuten von Fischfilets bekannt, die mit einer Schalteinheit zum Verschwenken des Messers versehen ist. Das Messer ist dazu mit einem Stellhebel fest verbunden, und es ist dem Messer ein einstellbarer, die Dickeneinstellung vorgebender Anschlag zugeordnet, wobei die Schalteinheit am Stellhebel angreift. Mittels dieser Anordnung wird eine Steuerung in Abhängigkeit von dem Gewicht des jeweils ankommenden Produkts vergenommen, wobei durch das Gewicht des Produktes über einen Hebel eine Schalterbetätigung erfolgt, die zur Folge hat, daß das Messer durch das von einem Fischfilet gebildete Produkt gestochen und auf eine vorgebbare Distanz zu einem Auflagetisch gebracht wird.

Aufgabe der Erfindung ist es, ein Verfahren der eingangs definierten Art in der Weise auszugestalten, daß unabhängig von der Art des abzuschwartenden und/oder zu enthäutenden Gutes eine vollständige und damit zur Vermeidung manueller Nachbearbeitung führende Entschwartung bzw. Enthäutung gewährleistet iwrd, und zwar bei praktisch vernachlässigbaren Anschnittverlusten und sowohl bei manueller als auch bei automatischer Zuführung des Gutes.

Gelöst wird diese Aufgabe nach der Erfindung dadurch, daß die angehobene Stellung des Messers im Leerlauf entsprechend einer wirksamen, jedoch erhöhten Schneiddickeneinstellung gewählt wird, daß das zu entschwartende oder zu enthäutende Gut gegen die sich in der erhöhten Schneiddickeneinstellung befindende Schneidkante des Messers geleitet wird, und daß die im Moment des Eindringens des Messers in das Gut entstehende Erhöhung der Förderwalzenantriebskraft zur Auslösung eines Kraftspeichers genutzt wird, der das bereits in der erhöhten Schneiddickeneinstellung in das zu entschwartende oder zu enthäutende Gut eingreifende Messer in die Betriebsstellung zurückführt.

Durch die Schaffung zweier exakt definierbarer und für sich jeweils vorgebbarer Schneidpositionen in Form einer Anschnitt-Schneidstellung und einer Betriebs-Schneidstellung und die Ausnützung des Kriteriums der sich in der unmittelbaren Anschnittphase ergebenden Förderwalzen-Zugkraft zum Zwecke der Aufhebung der Abstützung des Messerhalters in der Anschnittstellung wird auf äußerst einfache Weise ein optimaler Anschnitt gewährleistet, wobei sich gleichzeitig der überraschende Effekt der innerhalb kürzester Zeit sich ergebenden Rückführung des Messers in die vorgegebene Betriebsstellung einstellt.

Dabei befindet sich das Messer in der angehobenen Stellung nicht in einer inaktiven Position, sondern vielmehr bereits in einer ganz definierten Schneiddickeneinstellung, bei der es zu Beginn eines Entschwartungsvorganges wirksam wird, d.h. das Messer dringt mit dieser Schneiddickeneinstellung in das zu entschwartende Gut ein. Die erhöhte Schneiddickeneinstellung wird schlagartig bei der Überführung des Messers in die Betriebsstellung verringert. Dabei wird ein Kraftspeicher in Abhängigkeit von der Erhöhung der Förderwalzenantriebskraft betätigt und die Rückführung des Messers in die Betriebsstellung durch die von diesem Kraftspeicher gelieferte Kraft bewirkt. Während der Rückführung des Messers von der erhöhten Schneiddickeneinstellung in die Betriebsstellung befindet sich die Schneidkante bereits im zu entschwartenden Gut, wobei die Schneidkante bei der Überführung in die Betriebsstellung eine sehr steil abfallende Bewegungsbahn beschreibt.

Vorteilhafte Weiterbildungen des Verfahrens nach der Erfindung sowie bevozugte Ausführungsformen von Vorrichtung zur Durchführung des Verfahrens nach der Erfindung sind in Unteransprüchen angegeben.

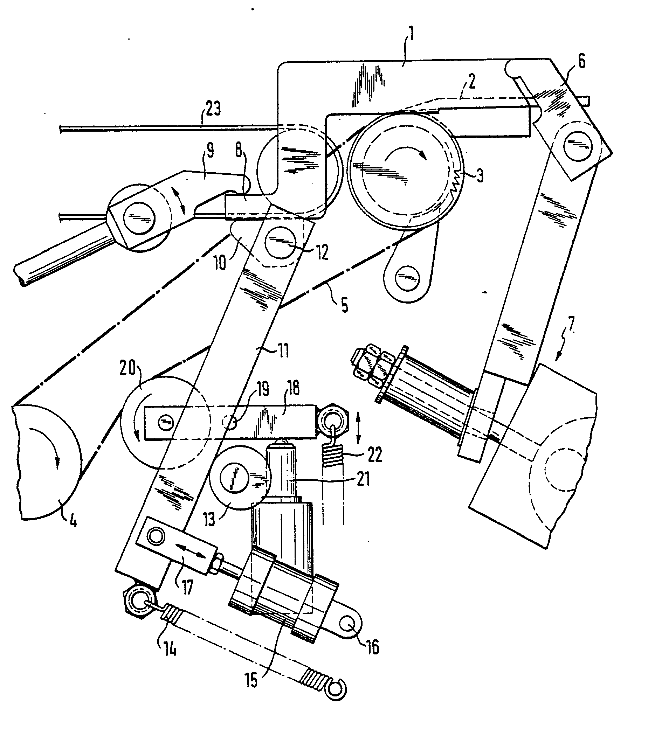

Die Erfindung wird im folgenden anhand eines Ausführungsbeispiels unter Bezugnahme auf die Zeichnung näher beschrieben; die einzige Figur der Zeichnung zeigt eine schematische Prinzipdarstellung einer bevorzugten Ausführungsform der Erfindung.

Die in der Zeichnung dargestellte Entschwartungsmaschine weist einen Messerhalter 1 auf, der ein auswechselbar befestigtes Messer 2 trägt, dessen Schneidkante im Bereich des Scheitels einer gezahnten oder geriffelten Förderwalze 3 gelegen ist.

Diese Förderwalze 3 wird über einen Motor 4 in der durch einen Pfeil gekennzeichneten Richtung angetrieben, und zwar über eine Abtriebskette 5.

Der Messerhalter 1 ist seitlich mit Stützflächen versehen, die in der Ruhestellung an entsprechenden Ringflächen der Förderwalze anliegen. Spannhebel 6 greifen an dem von der Zuführseite abgewandten Ende des Messerhalters 1 an und drücken den Messerhalter gegen die Stützflächen der Förderwalze 3. Die Haltekraft der Spannhebel 6 wird über eine Exzenter-Spanneinheit erzeugt, die allgemein mit dem Bezugszeichen 7 gekennzeichnet ist. Soll der Messerhalter 1 aus der Maschine genommen werden, so wird der Exzenter der Spanneinheit 7 über einen entsprechenden Hebel verschwenkt und damit die Vorspannung von den Hebeln 6 weggenommen.

Die zuführseitigen Endteile 8 der den Messerhalter 1 nach vorne verlängernden, seitlich des Zuführtisches 23 gelegenen Arme wirken mit Niederhaltern 9 zusammen, die entsprechend dem angegebenen Pfeil verschwenkbar sind und unter Federvorspannung stehen. Außerdem sind diese Endteile 8 auf Steuerorganen 10 abgestützt, die mit einem Stellhebel 11 über eine durchgehende Welle 12 fest verbunden sind. Jede Verschwenkung des Stellhebels 11 führt zu einer entsprechenden Verschwenkung der Steuerorgane 10 und damit zu einem Anheben oder Absenken des Messerträgers 1.

Die dargestellte Position entspricht dull-Stellung, wobei der über die Niederhalter 9 nach unten gedrückte Endteil 8 des Messerhalters 1 im wesentlichen eben auf den Flachseiten der Steuerorgane 10 aufliegt.

Die geschilderte Ausgestaltung und Halterung bzw. Abstützung des Messerhalters 1 führt dazu, daß sich in Abhängigkeit von der jeweiligen Dickeneinstellung über das Steuerorgan 10 eine Parallelverschiebung- bzw. versetzung des Messerhalters und damit auch des Messers 2 ergibt.

Die Einstellung des Steuerorgans 10 und damit die Einstellung der Schneidstellung des Messers 2 erfolgt über einen schwenkbar gelagerten Exzenter 13, an dem der Stellhebel 11 unter der Wirkung einer Spannfeder 14 während des Betriebs der Maschine anliegt. Jede Verstellung des Exzenters 13 führt zu einer entsprechenden Verschwenkung des Stellhebels 11 und damit auch zu einer Verstellung der Steuerorgane 10, an denen der Messerträger 1 aufliegt.

Die Einstellung der Anschnittstellung erfolgt ebenfalls über das Steuerorgan 10, jedoch unabhängig von dem Dicken-Einstellexzenter 13.

Die Vorgabe der Anschnittstellung erfolgt über die Zylinder-Kolbeneinheit 15, die einerseits an einem maschinenfesten Lager 16 und andererseits über eine Verbindungslasche 17 am Stellhebel 11 abgestützt ist. Bei Betätigung dieser Zylinder-Kolbeneinheit 15, die beispielsweise über ein Magnetventil erfolgen kann, wird der Stellhebel 11 um einen definierten Betrag um die Welle 12 im Uhrzeigersinn geschwenkt, wodurch der Messerträger 1 über das Steuerorgan 10 angehoben wird. Das Ausmaß der Verschwenkung bzw. des Anhebens des Messerträgers 1 kann durch einen in der Zeichnung nicht dargestellten Verstellanschlag exakt vorgegeben oder auch durch Wahl eines definierten Stellhubes der Zylinder-Kolbenanordnung festgelegt werden.

Wenn beispielsweise das Messer 2 für den Normalbetrieb auf einen Wert von etwa 2/10 bis 3/10 mm eingestellt wird, dann kann für die Anschnittstellung wiederum beispielsweise ein Wert von 3 bis 4 mm gewählt werden. Dies sind jedoch nur Beispielsangaben ohne einschränkenden Charakter. Vielmehr ist zu betonen, daß hinsichtlich der Wahl der Anschittstellung bei der erfindungsgemäßen Konstruktion große Freiheit besteht, was inbesondere auch deshalb möglich ist, weil die Rückkehr des Messers 2 von der Anschnittstellung in die normale Betriebsstellung, bei der die Dickensteuerung dann über die Schwarte erfolgt, äußerst schnell vor sich geht.

Die Umsteuerung von der Anschittstellung in die normale Betriebsstellung erfolgt in Abhängigkeit von der Spannung des Zugkettenabschnittes 5 zwischen Förderwalze 3 und Antriebsmotor 4. Die Kette 5, die im Leerlauf nicht straff gespannt ist, wird mittels eines in die Zugkette 5 eingreifenden Zahnrades 20 unter eine gewisse Vorspannung gesetzt, wobei diese Zahnrad 20 an einem Arm eines Schwenkbar gelagerten zweiarmigen Hebels 10 angebracht ist, an dessen freiem Arm eine das Zahnrad gegen die Kette drückende Feder 22 angreift. In der Zeichnung ist die Schwenkachse 19 des zweiarmigen Hebels 18 etwa mittig vorgesehen, aber dies stellt keine notwendige Bedingung dar. Ein Arm des zweiarmigen Hebels 18 wirkt mit einem vorzugsweise als Umschalter mit zwei definierten Schaltstellungen ausgebildeten Schalter 21 zusammen, welcher wiederum die Betätigung der Zylinder-Kolbeneinheit 15 steuert.

Ist der Zugkettenabschnitt 5, wie in der Zeichnung dargestellt, nicht straff gespannt, so entspricht dies dem Stillstands- und dem Leerlaufzustand.

Wird die Maschine in Betrieb gesetzt, so ändert sich während des Leerlaufzustandes die Spannung des Zugkettenabschnittes 5 im wesentlichen nicht, so daß über den Schwenkhebel 18, den Schalter 21 und die Zylinder-Kolbeneinheit 15 der Stellhebel 11 entsprechend der gewünschten Anschnittstellung verschwenkt wird und nicht mehr am Exzenter 13, der die Dickeneinstellung für den Betrieb festlegt, anliegt. Bei der auf diese Weise vorgegebenen Anschnittstellung wird entweder von Hand oder über einen Förderer abzuschwartendes Gut zugeführt, das auf die vordere Schneidkante des in gewünschter Weise Angehobenen Messers 2 trifft, welches aufgrund der angehobenen Stellung an der Fettschicht angreift und nicht gegen die harte Schwarte stößt.

Kurz nach dem Einschneiden des Messers in die Fettschicht erhöht sich schlagartig die Spannung im Zugkettenabschnitt 5, da für die Förderwalze 3 im Vergleich zum Leerlaufzustand eine wesentlich höhere Zugkraft benötigt wird. Der Motor 4 bringt diese Zugkraft auch auf, strafft aber zugleich den Zugkettenabschnitt 5 und verschwenkt damit das mit der Kette in Eingriff stehende Zahnrad 20, was zur Folge hat, daß über den zweiarmigen Hebel 18 der Schalter 21 betätigt, die Zylinder Kolbenanordnung entlastet und der Stellhebel 11 mittels der Feder 14 zur Anlage am Dicken-Einstellexzenter 13 gebracht wird. Wiederum als Folge davon folgt der Messerhalter 1 und damit das Messer 2 dem Steuerorgan 10. Die neue Position des Steuerorgans 10, die durch den Exzenter 13 vorgegeben ist, entspricht der für den Betrieb vorgesehenen Einstellung.

Ist das zu entschwartende Gut durch die Maschine gelaufen und dabei vollständig, d.h. ohne Zurücklassung von nicht entschwarteten Teilbereichen fertig entschwartet, dann läßt die Spannung im Zugkettenabschnitt 5 sofort wieder nach, die Zylinder-Kolbenanordnung 15 wird über den zweiarmigen Schwenkhebel 18 und den Schalter 21 aktiviert und damit wird auch der Messerhalter sofort wieder in die Anschnittstellung überführt und ist für das nächste zugeführte Stück wieder in der gewünschten Anschnittstellung.

Besonders vorteilhaft wirkt sich im Zusammenhang mit der beschriebenen Funktion der erfindungsgemäßen Maschine die spezielle Art der Halterung, Vorspannung und Abstützung des Messerhalters 1 über die Spannhebel 6 und die Niederhalter 9 aus. Eine Anwendung des erfindungsgemäßen Verfahrensprinzips auf herkömmliche Maschinen mit wippenartig gelagertem Messerhalter ist jedoch nicht ausgeschlossen.

Insbesondere in der Praxis bedeutsame Vorteile der erfindungsgemäßen Maschine bestehen darin, daß nicht nur die Dickeneinstellung sondern auch die Anschnitteinstellung stufenlos erfolgen kann, daß der zur Realisierung der Anschnitteinstellung erforderliche gerätetechnische Aufwand außerordentlich gering ist und daß selbst bei einem Ausfall der Anschnitteinstelleinheit die normale Entschwartungsfunktion ohne jegliche Beeinträchtigung weiterhin gegeben ist. Die Praxis hat ferner bereits gezeigt, daß nach dem erläuterten Prinzip einwandfreie Anschnittvorgänge durchgeführt werden und keinerlei Nachschneiden mehr erforderlich ist, so daß teuere Arbeitskraft eingespart werden kann. Sehr gering ist auch ein eventueller, sich bei Wahl einer großen Anschnitt-Schneidstärke ergebende Anschnittverlust, da das Messer überraschend schnell bereits in der Anschittphase in seine Normalstellung zurückkommt.

Vorzugsweise werden sämtliche Stelleinrichtungen, wie z.B. der Dicken-Einstellexzenter 13 oder ein Anschlagexzenter für den über die Zylinder-Kolbeneinheit 15 betätigten Stellhebel 11 mittels Stellmotoren betätigt, welche mit Positionsdetektoren versehen sind. Auf diese Weise ist es möglich, eine Einstellung der Betriebsparameter der Maschine über eine Drucktastensteuerung vorzunehmen und die jeweiligen Einstelldaten und Betriebsdaten auf einer Anzeigeeinheit digital darzustellen.

Zweckmäßigerweise wird auch eine Einrichtung zur Regelung der Drehzahl des Motors verwendet, wobei die jewelige Motordrehzahl dann ebenfalls digital angezeigt werden kann, so daß die Bedienungsperson auf besonders einfache Weise einerseits eine optimale, schnell erreichbare Einstellung der Maschine in Abhängigkeit von dem zu verarbeitenden Gut vornehmen kann und andererseits die angezeigten Daten auch jeweils Auskunft über den momentanen Betriebszustand der Maschine geben.

**Patentansprüche**

1. Verfahren zum Steuern der Messerstellung vor und während der Anschnittphase bei einer Maschine zum Entschwarten oder Enthäuten von Fleisch und dergleichen mittels eines bezüglich einer angetriebenen Förderwalze beweglich gelagerten und unter Federvorspannung stehenden Messers, bei dem das Messer im Leerlauf der Maschine jeweils in eine im Vergleich zur vorgebbaren Betriebsstellung angehobene Stellung und beim Auftreten eines Widerstands im Getriebeantrieb der Förderwalze in die Betriebsstellung zurückgeführt wird, dadurch gekennzeichnet, daß die angehobene Stellung des Messers im Leerlauf entsprechend einer wirksamen, jedoch erhöhten Schneiddickeneinstellung gewählt wird, daß das zu entschwartende oder zu enthäutende Gut gegen die sich in der erhöhten Schneiddickeneinstellung befindende Schneidkante des Messers geleitet wird, und daß die im Moment des Eindringens des Messers in das Gut entstehende Erhöhung der Förderwalzenantriebskraft zur Auslösung eines Kraftspeichers genutzt wird, der das bereits in der erhöhten Schneiddickeneinstellung in das zu entschwartende oder zu enthäutende Gut eingreifende Messer in die Betriebsstellung zurückführt.

2. Verfahren nach Anspruch 1, dadurch gekennzeichnet, daß die Rückführung des Messers von der Anschnittstellung in die jeweilige Betriebsstellung in Abhängigkeit von der Zugspannung einer zwischen Antriebsmotor und Förderwalze vorgesehenen Ketter oder dergleichen vorgenommen wird.

3. Verfahren nach Anspruch 1 oder 2, dadurch gekennzeichnet, daß das Messer durch Fremdkraft in die Anschnittstellung überführt und in der Anschnittstellung gehalten wird, und daß die Rückführung des Messers in die Betriebsstellung bei Wegnahme der Fremdkraft selbsttätig erfolgt.

4. Verfahren nach einem oder mehreren der vorhergehenden Ansprüche, dadurch gekennzeichnet, daß die Rückführung des Messers von der Anschnittstellung in die Betriebsstellung bezogen auf den Zeitpunkt der Erhöhung der Motor-Antriebskraft um einen vorgebbaren Betrag mit einer wählbaren zeitlichen Verzögerung vorgenommen wird.

5. Vorrichtung zur Ausführung des Verfahrens nach einem der Ansprüche 1 bis 4, mit einem in einem Messerhalter (1) fixierten, sich über die Breite einer angetriebenen Förderwalze (3) erstreckenden Messer (2), dessen Schneide im Bereich der oberen Scheitel-Mantellinie der Förderwalze gelegen ist, einer den Messerhalter in Richtung der Förderwalze drückenden Spanneinheit (7) und einer mit dem Messerhalter zusammenwirkenden Anordnung (13) zur Dickeneinstellung, dadurch gekennzeichnet, daß eine am Messerhalter (1) angreifende steuerbare Stelleinheit (10, 11) vorgesehen ist, die bei Leerlauf der Förderwalze (3) die zuführseitige Abstützung des Messerhalters (1) in einer Anschnittstellung bildet und daß in Abhängigkeit von der Erhöhung der für die Förderwalze (3) benötigten Antriebskraft bei gegen das Messer (2) laufendem Entschwartungs- bzw. Enthäutungsgut die Abstützung des Messerhalters (1) durch die Stelleinheit (10, 11) auf die Abstützung durch die Anordnung zur Dickeneinstellung umschaltbar ist, wobei der Messerhalter (1) im Bereich seines zuführseitigen Endes (8) auf einem schwenkbar und exzentrisch gelagerten Steuerorgan (10) abgestützt, diese Steuerorgan (10) einerseits eine vorgebbare, der jeweiligen Dickeneinstellung entsprechende Arbeitsposition und andererseits eine ebenfalls vorgebbare, der Anschnittstellung entsprechende Leerlaufposition aufweist und das Verschwenken des Steuerorgans (10) zwischen diesen beiden Positionen in Abhängigkeit von der Spannung des Zugkettenabschnitts (5) zwischen Antriebsmotor (4) und Förderwalze (3) gesteuert ist.

6. Vorrichtung nach Anspruch 5, dadurch gekennzeichnet, daß zum Verschwenken des Steuerorgans (10) eine zwischen zwei Betriebszuständen umschaltbare, pneumatisch oder elektrisch betätigbare Schalteinheit (15) vorgesehen ist, die über ein mit dem Zugkettenabschnitt (5) zusammenwirkendes Fühlelement (20) gesteuert ist.

7. Vorrichtung nach Anspruch 5 oder 6, dadurch gekennzeichnet, daß das schwenkbar gelagerte Steuerorgan (10) mit einem Stellhebel (11) fest verbunden ist und daß diesem Stellhebel (11) einerseits ein verstellbarer, die jeweilige Dickeneinstellung vorgebender Anschlag (13) zugeordnet ist und andererseits an diesem Stellhebel (11) die das Steuerorgan (10) in die der Anschnittstellung entsprechende Leerlaufposition schwenkende Schalteinheit (15) angreift.

8. Vorrichtung nach Anspruch 7, dadurch gekennzeichnet, daß der Stellhebel (11) mittels einer Feder (14) gegen den Anschlag (13) zur Dickeneinstellung vorgespannt ist und daß die Schalteinheit (15) aus einer Zylinder-Kolbenanordnung besteht, die den Stellhebel (11) bei zumindest im wesentlichen ungespanntem Zugkettenabschnitt (5) in vorgebbarem Ausmaß entgegen der Vorspannfeder (14) vom Anschlag (13) anhebt.

9. Vorrichtung nach einem oder mehreren der Ansprüche 5 bis 8, dadurch gekennzeichnet, daß das Fühlelement (20) aus einem in die Zugkette (5) eingreifenden Zahnrad besteht, das an einem Arm eines schwenkbar gelagerten zweiarmigen Hebels (18) angebracht ist, daß am freien Ende dieses zweiarmigen Hebels eine das Zahnrad gegen die Kette drückende Feder (22) angreift und daß in Abhängigkeit von der Schwenklage des zweiarmigen Hebels (18) ein Schalter (21) betätigt wird, der die pneumatische oder elektrische Schalteinheit (15) steuert.

10. Vorrichtung nach einem der Ansprüche 5 bis 9, dadurch gekennzeichnet, daß im Bereich des zuführseitigen Endes (8) des Messerhalters (1) eine unter Federvorspannung stehende Niederhalteeinrichtung (9) angreift.

## Revendications

1. Procédé de réglage de la position de la lame, avant et pendant la phase d'amorce de la coupe, d'une machine à enlever la couenne ou la peau d'une viande et d'un produit similaire, au moyen d'une lame sous pré-tension et mobile par rapport à un rouleau de transport entraîné, dans lequel la lame est ramenée dans une position relevée par rapport à la position de fonctionnement donnée, lorsque la machine tourne à vide, et dans la position de service lorsqu'une résistance apparaît dans le mécanisme de transmission du rouleau de transport, caractérisé en ce que la position relevée de la lame en marche à vide est choisie en fonction d'un réglage actif, mais supérieur, de l'épaisseur de coupe, en ce que le produit auquel on doit enlever la couenne ou la peau est guidé contre le tranchant de la lame se trouvant dans le réglage supérieur de l'épaisseur de coupe, et en ce que l'accroissement de la force d'entraînement du rouleau de transport, se produisant au moment où la lame pénètre dans le produit, est utilisé pour déclencher un accumulateur d'énergie qui ramène en position de fonctionnement la lame se trouvant déjà dans le réglage supérieur de l'épaisseur de coupe et pénétrant dans le produit auquel on doit enlever la couenne ou la peau.

2. Procédé selon la revendication 1, caractérisé en ce que le rappel de la lame de la position d'amorce de la coupe dans la position de fonctionnement s'effectue en fonction de la tension d'une chaîne ou d'un organe similaire, prévu entre le moteur d'entraînement et le rouleau de transport.

3. Procédé selon la revendication 1 ou 2, caractérisé en ce que la lame est amenée en position d'amorce de coupe et maintenue dans cette position par une force extérieure, et en ce que le rappel de la lame dans la position de fonctionnement s'effectue automatiquement par suppression de cette force extérieure.

4. Procédé selon l'une ou plusieurs des revendications précédentes, caractérisé en ce que le rappel de la lame de la position d'amorce de coupe dans la position de fonctionnement s'effectue avec une temporisation à sélectionner, par rapport à l'instant où la force d'entraînement du moteur augmente d'une quantité donnée.

5. Dispositif de mise en oeuvre du procédé selon l'une des revendications 1 à 4, comportant une lame (2) fixée dans un porte-lame (1) s'étendant sur la largeur d'un rouleau de transport (3) entraîné, dont le tranchant se situe dans la zone de la ligne supérieure sommet-enveloppe du rouleau de transport, comportant une unité de serrage (7) pressant le porte-lame en direction du rouleau de transport, ainsi qu'un dispositif (13) de réglage de l'épaisseur coopérant avec le porte-lame, caractérisé en ce qu'il est prévu une unité de réglage (10, 11) commandée agissant sur le porte-lame (1) et qui forme, pendant la marche à vide du rouleau de transport (3), l'appui côté alimentation du porte-lame (1), dans une position d'amorce de coupe, et en ce que le porte-lame (1) peut passer d'un appui sur l'organe de réglage (10, 11) à un appui sur le dispositif de réglage de l'épaisseur, en fonction de l'accroissement de la force d'entraînement nécessaire au rouleau de transport (3), lorsque le produit auquel il faut enlever la couenne ou la peau se déplace contre la lame (2), le porte-lame (1) prenant appui dans la zone de son extrémité (8) côté alimentation, sur un organe de commande (10) monté pivotant et excentrique, cet organe de commande (10) présentant d'une part une position de travail donnée, correspondant au réglage respectif de l'épaisseur, et d'autre part, une position de marche à vide également donnée, correspondant à la position d'amorce de coupe, et le pivotement de l'organe de commande (10) étant commandé entre ces deux positions, en fonction de la tension de la section (5) de la chaîne de traction, placée entre le moteur d'entraînement (4) et le rouleau de transport (3).

6. Dispositif selon la revendication 5, caractérisé en ce que pour faire .pivoter l'organe de commande (10) il est prévu une unité de commutation pouvant être commutée entre deux états de fonctionnement, actionée pneumatiquement ou électriquement, qui est commandée par un élément palpeur (20) coopérant avec la section (5) de la chaîne de traction.

7. Dispositif selon la revendication 5 ou 6, caractérisé en ce que l'organe de commande (10) monté pivotant est solidaire d'un levier de réglage (11) et en ce que, d'une part ce levier de réglage (11) est associé à une butée (13) réglable, déterminant dans chaque cas le réglage de l'épaisseur, et d'autre part, l'unité de commutation (15) faisant pivoter l'organe de commande (10) dans la position de marche à vide correspondant à la position d'amorce de coupe, agit sur ce levier de réglage (11).

8. Dispositif selon la revendication 7, caractérisé en ce que le levier de réglage (11) est prétendu au moyen d'un ressort (14), contre la butée (13) de réglage de l'épaisseur, et en ce que l'unité de commutation (15) est constituée d'un dispositif à cylindre et piston qui relève le levier de réglage (11) de la butée (13), dans une mesure donnée, à l'encontre de la force du ressort de pré-tension (14), lorsque la section (5) de la chaîne de traction est au moins à l'état sensiblement non tendu.

9. Dispositif selon une ou plusieurs des revendications 5 à 8, caractérisé en ce que l'élément palpeur (20) est constitué d'une roue dentée engrenant dans la chaîne de traction (5), laquelle roue est montée sur un bras d'un levier (18) à deux bras monté pivotant, en ce qu'à l'extrémité libre de ce levier à deux bras, un ressort (22) presse la chaîne contre la roue dentée, et en ce qu'on interrupteur (21), qui commande l'unité de commutation (15) pneumatique ou électrique, est actionné en fonction de la position de pivotement du levier (18) à deux bras.

10. Dispositif selon l'une des revendications 5 à 9, caractérisé en ce qu'un dispositif presseur (9), pré-tendu par un ressort, agit dans le zone de l'extremité (8) côté alimentation du porte-lame (1).

**Claims**

1. A method for controlling the knife position prior to and during the initial cutting phase in a machine for removing the rind from for skinning meat and the like by means of a spring biased knife which is movably supported relative to a driven conveying roller, wherein the knife is guided during idling of the machine in each case back into a raised position when compared with the predeterminable operating position, and is guided back into the operating position on occurrence of a resistance in the drive transmission for the conveying roller, characterized in that the raised position of the knife during idling is selected in accordance with an effective but increased cutting thickness setting; in that the material from which the rind is to be removed, or which is to be skinned, is directed against the cutting edge of the knife which is the increased cutting thickness setting; and in that the increase of the conveying roller drive force at the instant of penetration of the knife into the material is exploited to release a store of energy which feeds the knife, which already engages in the increased cutting thickness setting into the material from which the rind is to be removed, or which is to be skinned, back into the operating position.

2. A method in accordance with claim 1, characterized in that the return of the knife from the initial cutting position into the respective operating position is effected in dependence on the tension of a chain or the like provided between drive motor and conveying roller.

3. Method in accordance with claim 1 or claim 2, characterized in that the knife is moved via outside force into the initial cutting position and is held in the initial cutting position; and in that the return of the knife into the operating position takes place automatically on removal of the outside force.

4. Method in accordance with one or more of the preceding claims, characterized in that the return of the knife from the initial cutting position into the operating position is effected with a selectable time delay relative to the time of increase of the motor drive force by a predeterminable amount.

5. Apparatus for carrying out the method of one of the claims 1 to 4 comprising a knife (2) which is fixed in a knife holder (1) and extends over the width of a driven conveying roller (3), with the edge of the knife being disposed in the region of the upper apex line/generatrix of the conveying roller; a biasing unit (7) which presses the knife holder in the direction of the conveying roller; and an arrangement (13) for thickness adjustment which cooperates with the knife holder, characterized in that a controllable positioning unit (10, 11) is provided which forms the infeed support for the knife holder (1) in an initial cutting position during idling of the conveying roller (3); and in that, in dependence on the increase of the drive force required for the conveying roller (3) when the material from which the rind is to be removed or which is to be skinned runs against the knife (2), the support of the knife holder (1) by the positioning unit (10, 11) can be switched over to the support by the arrangement for the thickness adjustment, with the knife holder (1) being supported in the region of its infeed end (8) on a control member (10) which is pivotable and excentrically mounted, said control member (10) having on the one hand a predeterminable working position corresponding to the prevailing thickness adjustment and on the other hand a likewise predeterminable idling position corresponding to the initial cutting position, and with the pivoting of the control member (10) between these two positions being controlled in dependence on the tension of the tensioned chain section (5) between drive motor (4) and conveying roller (3).

6. Apparatus in accordance with claim 5, characterized in that a pneumatically or electrically actuable switching unit (15) which can be switched over between two operating states is provided for pivoting of the control member (10), and is controlled via a sensor element (20) cooperating with the tensioned chain section (5).

7. Apparatus in accordance with claim 5 or claim 6, characterized in that the pivotally mounted control member (10) is fixedly connected with a positioning lever (11); and in that this positioning lever (11) is on the one hand associated with an adjustable abutment (13) which predetermines the prevailing thickness adjustment and, on the other hand, the switching unit (15) which pivots the control member (10) into the initial cutting position corresponding to the idling position acts on this positioning lever (11).

8. Apparatus in accordance with claim 7, characterized in that the positioning lever (11) is biased by means of a spring (14) against the abutment (13) for thickness adjustment; and in that the switching unit (15) consists of a cylinder-piston arrangement which lifts the positioning lever (11) away from the abutment (13) by a predeterminable extent against the bias spring (14) when the tensile chain section (5) is at least substantially untensioned.

9. Apparatus in accordance with one or more of the claims 5 to 8, characterized in that the sensor element (20) consists of a sprocket which engages in the tensioned chain (5) and which is mounted on one arm of a pivotally mounted two armed lever (18); in that a spring (22) which presses the sprocket against the chain engages at the free end of this two armed lever; and in that in dependence on the pivotal position of the two armed lever (18) a switch (21) is actuated which controls the pneumatic or electrical switching unit (15).

10. Apparatus in accordance with one of the claims 5 to 9, characterized in that a spring bias hold down device (9) engages in the region of the infeed end (8) of the knife holder (1).